# EUROPÄISCHE PATENTANMELDUNG

(11) **EP 3 349 099 A1**
(43) Veröffentlichungstag der Anmeldung: **18.07.2018**
(21) Anmeldenummer: 17020016.6
(22) Anmeldetag: 13.01.2017
(51) Int. Cl.: G06F 3/01, G06T 19/00, H04W 4/02, H04L 29/08

(54) **IMMERSIVES INFORMATIONS- UND KOMMUNIKATIONSMEDIUM FUER SEHR GROSSE NUTZERZAHLEN**

(71) Anmelder: Brassel, Kai-Holger, 21075 Hamburg (DE)
(72) Erfinder: Brassel, Kai-Holger, 21075 Hamburg (DE)

(57) **Zusammenfassung**

Die Erfindung betrifft ein standortbasiertes System und Verfahren zur Bereitstellung und Verwendung eines Mediums, über das Nutzer auch in sehr großer Zahl mittels immersiver Technologien in Verbindung treten, kommunizieren und interagieren, sowie von dritter Seite informiert werden können. Dazu erzeugt ein Server in einem Kommunikationsnetzwerk (1) eine Menge von virtuellen digitalen Objekten (10), die auf einer virtuellen, von den möglichen Standorten aller angeschlossenen Endgeräte (20) wenigstens 10 km entfernten Fläche (11) angeordnet sind, und die in Abhängigkeit von Standort und Orientierung des jeweiligen Endgerätes (20) zur Anzeige (21) gebracht werden. Durch ausschließlich unmittelbar-immersive Aktionen können Nutzer verschiedene Bereiche der virtuellen Fläche (11) inspizieren, und sich bspw. die Inhalte interessant erscheinender digitaler Objekte (10) durch Anvisieren (31) erschließen.

## Beschreibung

Die Erfindung betrifft ein standortbasiertes System und Verfahren zur Bereitstellung und Verwendung eines Mediums, über das Nutzer auch in sehr großer Zahl mittels immersiver Technologien in Verbindung treten, kommunizieren und interagieren, sowie von dritter Seite informiert werden können.

Wie zuletzt auch am Erfolg des mobilen Computerspiels Pokémon GO zu erkennen, sind sog. immersive Technologien durch die Leistungsfähigkeit moderner Computer- und Kommunikationssysteme massentauglich geworden. Zu den immersiven Technologien zählen u.a.: Virtual Reality (VR) Systeme, Augmented Reality (AR) Systeme oder auch Telepräsenzsysteme.

Hergebrachte symbolische und ikonische Kommunikations- und Interaktionsformen, etwa der Austausch von Textnachrichten, Werbung auf Internetseiten oder die Interaktionen mit digitalen Karten, trennen scharf zwischen dem Nutzer auf der einen Seite der Bedienoberfläche, und den zu präsentierenden und zu bearbeitenden Informationen auf der anderen Seite.

Im Unterschied dazu zielen immersive Technologien darauf ab, die Trennung zwischen Nutzer und dargebotenen Informationen möglichst aufzuheben. VR-Systeme setzen dazu Avatare ein, also Stellvertreter des Nutzers in digitalen, virtuellen Welten. AR-Systeme gehen den umgekehrten Weg, indem sie digitale Informationen in die physikalische Umwelt des Nutzers einblenden. Der Vorteil dieser Ansätze liegt im unmittelbareren Zugang und Umgang der Nutzer mit digitalen Informationen durch aktive Handlungen wie Umherschauen, Zeigen, Greifen, Werfen etc.

Es gibt verschiedene Versuche, Individual-, Gruppen-, oder Massenkommunikation in digitalen Kommunikationsnetzwerken mittels immersiver Technologien zu verbessern, im Bereich der VR bspw. die aus US 2011/1225516 A bekannte Bereitstellung virtueller, sozialer Treffpunkte oder die zu Anfang des Jahrhundert entwickelte Plattform "Second Life".

AR-Systeme erweitern zu diesem Zweck die Umgebung eines Nutzers - sofern er sie durch ein Endgerät, wie bspw. ein Smartphone, betrachtet - mit Informationen entsprechender Dienstanbieter oder Mitteilungen anderer Nutzer, die Objekten, Subjekten oder geokodierten Orten in seiner Nähe angezeigt werden. Die Informationen oder Mitteilungen können bspw. in Form von virtuellen Notizzetteln, die an die dazugehörigen Objekten oder Orten angebracht sind (vgl. bspw.
US 2014/176312 A1), virtuellen Graffitis auf Objekten (vgl. bspw. US 2012/327120 A1) oder in Form von virtueller Himmelsschrift (vgl. US 2010/081416 A1) angezeigt werden.

Nachteilig an all diesen Lösungen ist, dass dem Nutzer nur Informationen und Mitteilungen in seiner Umgebung - in der Regel nur in seiner unmittelbaren Umgebung - angezeigt werden. Die darüber hinausgehende Erweiterung des Anzeigebereiches führt bei immersiven Ansätzen nach heutigem Stand der Technik zu unbrauchbaren Resultaten, da Informationen, die sich jenseits des Horizontes befinden, als im Erdboden befindlich angezeigt werden, und sie sich zudem auch oft überlappen, d.h. in Blickrichtung des Nutzers hintereinander angeordnet sind, sodass die dem Nutzer näherliegende Information die dahinterliegende Information verdeckt. Bei den Systemen müssen daher Vorkehrungen getroffen werden, dass in solchen Fällen zumindest die dem Nutzer näherliegende Information korrekt dargestellt wird, bspw. indem der Abstand der einzelnen Informationen zu dem Nutzer ermittelt und nur die Information mit dem kleinsten Abstand angezeigt wird, während die anderen Informationen ausgeblendet werden. Aus der EP 3 028 121 B1 ist auch ein System bekannt, bei dem entsprechend überlappende Informationen zu einer einzelnen Information zusammengefasst werden.

Nach heutigem Stand der Technik können Nutzer von AR-Systemen also nur dann unmittelbar-immersiv miteinander kommunizieren und interagieren, wenn sie sich in räumlicher Nähe zueinander befinden. Dies schränkt die Anzahl möglicher Kommunikationspartner stark ein wie auch die Möglichkeit, Informationen von dritter Seite aus vielen Nutzern im gemeinsam erfassbaren Raum zugänglich zu machen.

Ebenfalls nachteilig ist die Notwendigkeit, die entsprechenden Orte zunächst einmal finden und dann zu einem verbredeten Zeitpunkt aufsuchen zu müssen. Dazu dienen normalerweise nicht-immersive Kommunikationsmedien wie Internetsuche, Chats, Karten o.ä., was einen Medienbruch bedeutet, d.h. in der Praxis die Verwendung unterschiedlicher Bedienoberflächen. Zeitaufwand, Kosten und Gefährdungen durch die physisch notwendige Fortbewegung kommen erschwerend hinzu.

### ZUSAMMENFASSUNG DER ERFINDUNG

Die Aufgabe der vorliegenden Erfindung ist es, ein System und Verfahren zu schaffen, das ein großräumig funktionierendes immersives Medium bereitstellt, über das eine sehr große Anzahl von Nutzern ohne Medienbruch miteinander in Verbindung treten, kommunizieren und interagieren können, und dass somit die oben beschriebenen Nachteile aus dem Stand der Technik nicht mehr aufweist.

Gelöst wird diese Aufgabe durch ein System und Verfahren gemäß dem Hauptanspruch. Vorteilhafte Weiterbildungen sind Gegenstand der abhängigen Ansprüche.

Demnach betrifft die Erfindung einen Server in einem Kommunikationsnetzwerk sowie eine Menge angeschlossener Endgeräte, jeweils umfassend ein Anzeigeelement zur grafischen Anzeige von Informationen, ein Standortbestimmungsmodul zur Ermittlung des momentanen Standorts des Endgerätes, ein Ausrichtungsbestimmungsmodul zur Bestimmung der momentanen Orientierung des Endgerätes, ein Kommunikationsmodul sowie ein Datenverarbeitungsmodul,
- wobei der Server eine Menge von virtuellen digitalen Objekten bereitstellt, denen jeweils eine Position im Raum zugewiesen ist, die auf einer mindestens 10 km, evtl. auch hunderte oder tausende km von den möglichen Standorten aller Endgeräte entfernten virtuellen Fläche liegt;
- wobei das Datenverarbeitungsmodul zur Ermittlung derjenigen digitalen Objekte, welche ausgehend von dem ermittelten Standort in einem virtuellen Sichtkegel um eine Kegelachse parallel zur ermittelten Orientierung liegen, und zur Berechnung einer winkel- und abstandsgetreuen Darstellung der so ermittelten digitalen Objekte als grafische Knoten zur Anzeige auf dem Anzeigeelement ausgebildet ist;
- wobei für die obige Ermittlung der Endgeräteposition eine Kilometer-genaue Angabe von geographischer Länge und Breite genügt, und für alle Endgeräte dieselbe Höhe von bspw. 100 m über dem Meeresspiegel angenommen wird;
- wobei die digitalen Objekte derart beabstandet zueinander auf der virtuellen Fläche angeordnet sind, dass sie bei der winkel- und abstandsgetreuen Darstellung auf den Endgeräten als voneinander abgegrenzt dargestellt werden;
- wobei das Datenverarbeitungsmodul zur Identifizierung digitaler Objekte ausgebildet ist, die an einer besonders markierten Stelle der Anzeige, bspw. in ihrem Zentrum, angezeigt werden, sodass Nutzer auf diese Weise interessierende Objekte anvisieren können;
- und wobei sich die Positionen aller digitalen Objekte relativ zu den Positionen aller Endgeräte höchstens so schnell ändern dürfen, dass den Nutzern das Anvisieren der digitalen Objektes noch gelingt.

Die durch den Server bereitgestellte virtuelle Fläche und die darauf positionierten digitalen Objekte stellen ein immersives Medium dar, das nur deshalb für alle Nutzern gleich leicht zugänglich ist, weil sich erfindungsgemäß keines der digitalen Objekte in der Nähe irgendeines Nutzers befindet und sich infolgedessen alle digitalen Objekte so im Raum verteilen lassen, dass sie sich gegenseitg nicht überdecken. Über dieses Medium kommunizieren Server und Nutzer, sowie Nutzer untereinander gemäß folgendem Verfahren:
a) Bereitstellen einer Menge von digitalen Objekten durch den Server im oben beschriebenen System, wobei diese mit spezifischen visuellen Merkmalen versehen werden können (Farben, Formen, Überschriften, Graphiken usw.), die in den Endgeräten unmittelbar zur Anzeige kommen, sowie weiteren, nur mittelbar zugänglichen digitalen Inhalten bspw. Text, Fotos, URIs oder Audio;
b) Ermittlung sowie winkel- und abstandsgetreue Darstellung in den Endgeräten derjenigen digitalen Objekte, welche ausgehend vom je aktuell ermittelten Standort und Orientierung in einem virtuellen Sichtkegel um eine Kegelachse parallel zur ermittelten Orientierung liegen;
c) Auswahl bestimmter digitaler Objekte durch Nutzer, bspw. indem diese ein digitales Objekt über einen definierten Zeitraum hinweg anvisieren;
d) Zugänglichmachung der zu einem ausgewählten digitalen Objekt gehörenden weiteren digitalen Inhalten, sofern vorhanden;
e) Zuweisung neuer Inhalte oder visueller Merkmale zu einem ausgewählten digitalen Objekt durch dazu autorisierte Nutzer und deren Übermittlung an den Server, der sie an alle angeschlossenen Endgeräte weiterverteilt, die daraufhin ihre Anzeige entsprechend anpassen.

Gegenüber dem Stand der Technik stellt die Erfindung erstmalig ein Medium bereit, über das Nutzer auch in sehr großer Zahl gleichzeitig mittels immersiver Technologien in Verbindung treten, kommunizieren und interagieren, sowie von dritter Seite informiert werden können.

Informationen und Mitteilungen werden erfindungsgemäß mittels digitaler Objekte auf einer virtuellen Fläche bereitgestellt, die wenigstens 10 km, möglicherweise aber auch hunderte oder tausende km von allen möglichen Standorten der Endgeräte entfernt verläuft.

Die digitalen Objekte werden den Nutzern zunächst als grafische Knoten auf den Endgeräten in Abhängigkeit des Standorts und der Orientierung des jeweiligen Endgerätes dargestellt, nämlich wenn sie sich gemäß ihren Positionierung auf der virtuellen Fläche im vom Endgerät ausgehenden Sichtkegel befinden. Durch ausschließlich unmittelbar-immersive Aktionen können Nutzer durch Veränderung der Orientierung nach und nach verschiedene Bereiche der virtuellen Fläche betrachten, sich nach interessant erscheinenden Informationen umschauen, um sich deren Inhalte dann erfindungsgemäß durch Anvisieren zu erschließen.

Die grafische Darstellung sowie der Abstand der einzelnen digitalen Objekte auf der virtuellen Fläche sind dabei so aufeinander abgestimmt, dass die einzelnen digitalen Objekte voneinander beabstandet dargestellt, und somit vom Nutzer einzeln wahrgenommen werden können.

Die grafischen Knoten können visuelle Merkmale, z.B. Farben oder Symbole aufweisen, anhand derer der Nutzer unmittelbar die Art der mit dem Knoten verknüpften Information ablesen kann, bspw. Politik- oder Wirtschaftsnachrichten, Blogeinträge, Chat-Foren, Sportergebnisse, etc. Es ist auch möglich, dass einzelne Knoten auf diese Weise unmittelbar einen Teil der damit verknüpften Informationen anzeigen. So ist es bspw. möglich, dass ein grafischer Knoten unmittelbar den momentanen Spielstand eines Fußballspiels wiedergibt, wobei die weitergehenden, damit verknüpften Informationen Live-Ticker, Aufstellungsübersichten, etc. sein können.

Mit der Erfindung werden einem Nutzer also Informationen und Mitteilungen in Abhängigkeit seines momentanen Standortes zur Verfügung gestellt, wobei das Informationsangebot - anders als bei bekannten AR-Systemen - nicht auf die unmittelbare Umgebung des Nutzers beschränkt ist, sondern aufgrund der erfindungsgemäß vorgesehenen weit entfernten virtuellen Fläche ausreichend Möglichkeiten bietet, um auch von der unmittelbaren Umgebung entfernt liegende Informationen zugänglich zu machen.

Indem erfindungsgemäß nicht die nähere Umgebung der Nutzer mit Informationen und Mitteilungen erweitert wird, sondern eine entfernt im Raum liegende virtuelle Fläche, ergeben sich gegenüber bekannten AR-Systemen weitere Vorteile. So ist aufgrund der großen Entfernung zu der virtuellen Fläche, auf der die digitalen Objekte angeordnet sind, anders als bei der AR, eine exakte Positionsbestimmung durch das Endgerät nicht erforderlich. Insbesondere kann auf eine energieintensive Positionsbestimmung per Satellitennavigation verzichtet und bspw. auf Mobilfunk-basierte Ortung zurückgegriffen werden. Die daraus resultierenden vergleichsweise ungenauen Positionsangaben sind aufgrund der großen Distanz zwischen Endgerät und virtueller Fläche dennoch ausreichend. Auch kann auf eine ressourcenintensive Erfassung und Verarbeitung von Bilddaten verzichtet werden, da eine für den Nutzer unmittelbar erkennbare Verknüpfung der grafischen Knoten mit einem Objekt in seiner Umgebung nicht erfolgt und in der Folge auch keine Detailausrichtung der grafischen Knoten anhand von in den Bilddaten erkannten Strukturen erforderlich ist. Im Ergebnis ist die vorliegende Erfindung deutliche ressourcenschonender als bekannte AR-Systeme, was sich in einer längeren Batterielaufzeit des mobilen Endgerätes wiederspiegelt.

Es ist bevorzugt, wenn entsprechend autorisierte Nutzer neue digitale Objekte erzeugen können, bspw. durch längeres Anvisieren noch nicht belegter Stellen auf der vom Server bereitgestellten virtuellen Fläche, woraufhin die neuen digitalen Objekte an den Server übermittelt werden, der sie an alle angeschlossenen Endgeräte weiterverteilt, welche sodann die o.g. Verfahrensschritte b) bis e) auch für die neu erzeugten digitalen Objekte ausführen können.

Es ist bevorzugt, wenn das Datenverarbeitungsmodul zum Ausblenden derjenigen digitalen Objekte ausgebildet ist, die ausgehend von dem ermittelten Standort eins Endgerätes unterhalb der Horizontlinie verlaufen, oder unterhalb einer zu ihr parallel verlaufenden Linie, die gemäß eines für alle Endgeräte gleichen Parameters in Richtung Zenit angehoben, oder in Richtung Nadir abgesenkt werden kann. Dadurch kann eine Reduzierung der darzustellenden digitalen Objekte auf regional verfügbare Informationen und Mitteilungen erreicht werden und es kann auf die Berechnung der Lage und Position einer Vielzahl grafischer Knoten verzichtet werden. Die Größe der Region nimmt dabei grundsätzlich mit der Entfernung der digitalen Objekte von den Endgeräten zu.

Es ist bevorzugt, wenn die virtuelle Fläche doppelt gekrümmt ist. Weiter vorzugsweise treffen sich die Flächennormen dieser Fläche in einem einzelnen Punkt, womit die Fläche eine Kugelfläche oder ein Teil davon bildet. Besonders bevorzugt ist es, wenn der genannte Schnittpunkt der Flächennormalen im Erdmittelpunkt liegt. Im letztgenannten Fall soll die Fläche geodätisch oberhalb der Erdoberfläche und der Endgeräte verlaufen. Durch eine entsprechende Ausgestaltung der Fläche wird sichergestellt, dass sich die digitalen Objekte, die vorzugsweise äquidistant auf der Fläche angeordnet sind, aus Sicht eines beliebigen Endgerätes unabhängig von dessen Standort nicht überdecken können. Auf eine Überprüfung der grafischen Knoten hinsichtlich möglicher Überdeckungen, wie sie bei AR-Systemen im Stand der Technik zwingend erforderlich wäre, und eine evtl. Zusammenfassung mehrerer digitaler Objekte zu einem einzelnen anzuzeigenden Objekt kann vollständig verzichtet werden.

Es ist besonders bevorzugt, wenn visuelle Merkmale und digitale Inhalte wenigstens eines digitalen Objektes mit einem unterhalb des Objektes auf der Erdoberfläche befindlichen Ort oder Nutzer korrespondieren. Beispielweise kann mit einem digitalen Objekt über einer Spielstätte der aktuelle Spielstand, mit einem digitalen Objekt über einem Kino das aktuelle Programm verknüpft werden. Visiert ein Nutzer ein solches digitales Objekt an, gibt die der Azimutanteil der Orientierung des Endgerätes die Richtung an, in der dieser Ort zu finden ist.

Das Datenverarbeitungsmodul ist vorzugsweise dazu ausgebildet, die Dauer, für die ein digitales Objekt anvisiert wird, zu erfassen. Durch Auswertung dieser Verweildauer lässt sich ermitteln, welche Informationen oder Mitteilungen häufig und für längeren Zeitraum anvisiert werden und welche nicht. Dadurch als offenbar uninteressant identifizierte Inhalte können dann durch andere ersetzt werden, d.h. mit dem fraglichen digitalen Objekten werden neue Informationen oder Mitteilungen verknüpft. Da das Anvisieren eines digitalen Objektes mit einem gewissen physischen und zeitlichen Aufwand verbunden ist, eignet sich die Messung der Verweildauer auch in besonderer Weise dazu, Präferenzen der Nutzer, bspw. in Meinungsumfragen, zu erheben.

Es ist bevorzugt, wenn das Datenverarbeitungsmodul und Kommunikationsmodul dazu ausgebildet sind, fortlaufend an den Server zu übermitteln, welche Nutzer momentan welche digitale Objekte anvisieren.

Weiterhin bevorzugt ist es, wenn der Server dahingehend ausgebildet ist, visuelle Merkmale oder Inhalt eines digitalen Objektes programmgesteuert abhängig davon zu verändern, wieviele oder welche Nutzer dieses Objekt momentan anvisieren, und diese Veränderungen an alle angeschlossenen Endgeräte weiterzuverteilen, die daraufhin ihre Anzeige ggf. anpassen. Eine derartige automatische Verarbeitung unmittelbarimmersiver kollaborativer Nutzer-Aktionen wird erfindungsgemäß erstmals auch für sehr große Nutzerzahlen möglich, und bietet zahlreiche Anwendungsfelder, bspw. im Bereich der Online-Computerspiele.

Weiterhin bevorzugt ist es, wenn das System dazu ausgebildet ist, dass Nutzer, während sie gleichzeitig dasselbe digitale Objekt anvisieren, miteinander über einen zusätzlichen Kanal miteinandern kommunizieren können, bspw. per Chat-, Sprach- oder Videoverbindung.

Bei dem Endgerät kann es sich um ein mobiles Endgerät, wie beispielsweise ein Smartphone oder Tablet handeln. Das Endgerät kann aber auch ein Computer mit angeschlossener Datenbrille o.ä. sein.

### DETAILLIERTE BESCHREIBUNG DER ERFINDUNG

Die Erfindung wird nun anhand eines vorteilhaften Ausführungsbeispiels unter Bezugnahme auf die beigefügten Zeichnungen näher beschrieben. Es zeigen:
- Figur 1:: eine schematische Darstellung einer möglichen Anordnung der digitalen Objekte auf einer virtuellen Fläche bei einem erfindungsgemäßen System;
- Figur 2:: eine schematische Detaildarstellung eines Endgerätes in einem erfindungsgemäßen System;
- Figur 3:: eine schematische Darstellung eines erfindungsgemäßen Systems mit einer beispielhaften Detailabbildung digitaler Objekte mittels grafischer Knoten auf dem Anzeigeelement.

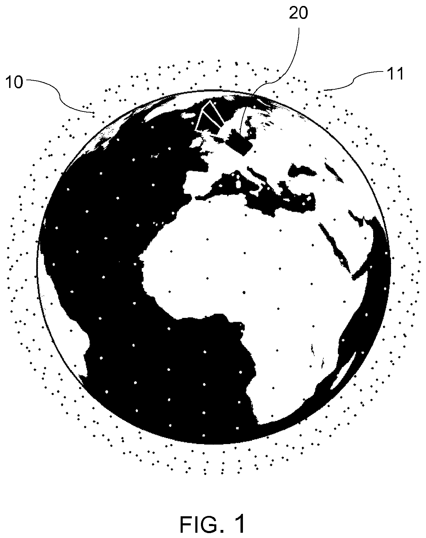

In Figur 1 ist exemplarisch dargestellt, wie die virtuellen digitalen Objekten (10) im Raum positioniert werden können. Im Beispiel wurden 642 Objekte äquidistant auf einer 1000 km über der Erde befindlichen Kugeloberfläche positioniert. Die einzelnen digitalen Objekte (10) sind damit erfindungsgemäß auf einer virtuellen Fläche (11) angeordnet. Im dargestellten Ausführungsbeispiel ist die Fläche (11) kugelförmig (und somit doppelt gekrümmt) ausgestaltet, wobei der Mittelpunkt der Kugel mit dem Erdmittelpunkt zusammenfällt. Der Längenabstand jeweils zwei benachbarter digitaler Objekte (10) ist über die gesamte Fläche konstant.

Anzahl und Höhe der digitalen Objekte in Figur 1 wurden zum Zwecke einer übersichtlichen Darstellung gewählt. Dabei wären je nach Standort auf der Erde um die 43 digitale Objekte über dem Horizont sichtbar. Würde man bspw. 10242 Objekte auf einer 400 km hohen Kugeloberfläche äquidistant verteilen, lägen jeweils um die 320 Objekte über dem Horizont eines beliebigen Standorts.

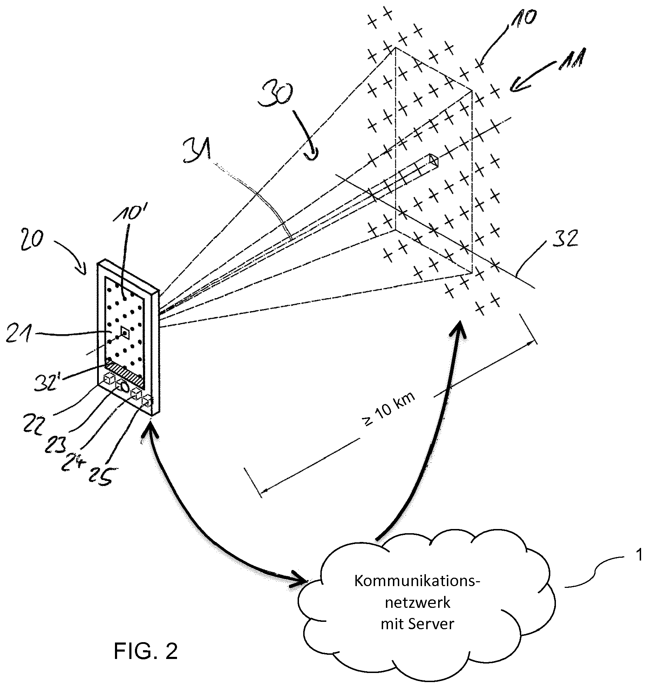

Figur 2 zeigt eine schematische Darstellung eines Endgerätes im erfindungsgemäßen System im Detail, wobei aus Darstellungsgründen die virtuelle Fläche (11) nicht gekrümmt, sondern vereinfacht als Ebene dargestellt ist.

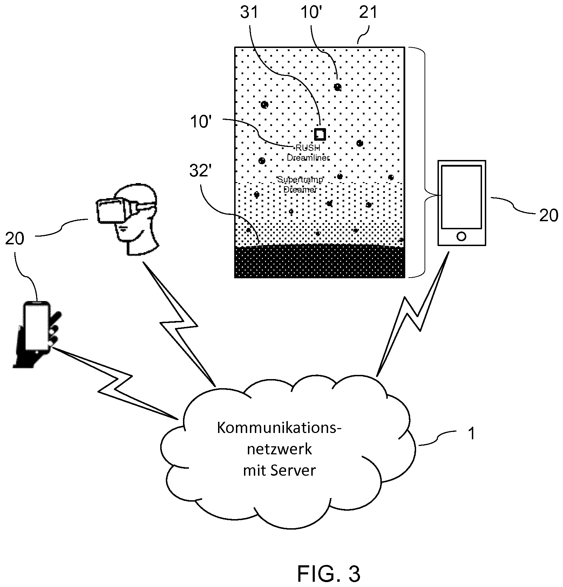

Figur 3 zeigt schematisch, wie derart verteilte digitale Objekte winkel- und abstandsgetreu in der Anzeige eines Endgeräts (21) erscheinen könnten.

Das erfindungsgemäße System umfasst einen Server in einem Kommunikationsnetzwerk (1), der - wie bereits in Zusammenhang mit Figur 1 erläutert - Informationen in Form von digitalen Objekte (10) bereitstellt, wobei die Objekte durch den Server (1) derart positioniert sind, dass sie sich alle auf der Fläche (11) befinden. Figur 2 stellt lediglich einen Teil der virtuellen Fläche (11) dar.

Das System umfasst weiterhin ein mobiles Endgerät (20), welches im gezeigten Ausführungsbeispiel ein Smartphone ist. Das Endgerät (20) umfasst ein Anzeigeelement (21) zur grafischen Anzeige von Informationen sowie ein Ausrichtungsbestimmungsmodul (23), welches die Ausrichtung des Endgerätes in Azimut- und Elevationsrichtung gegenüber der Erdoberfläche ermittelt. Weiterhin ist ein Standortbestimmungsmodul (22) vorgesehen, mit dem der momentane Standort des Endgerätes (20) in geographischen Koordinaten ermittelt werden kann. Der momentane Standort wird dabei lediglich in Form von zweidimensionalen geodätischen Koordinaten ermittelt, wobei als Höhe des Endgerätes grundsätzlich 100 m über NN angenommen wird. Da weiterhin eine relativ ungenaue Positionsbestimmung des Endgerätes (20) bei dem erfindungsgemäßen System ausreicht, kann das Standortbestimmungsmodul (22) sehr energiesparend ausgeführt sein. In der Regel ist eine WLAN- oder Mobilfunk-basierte Ortung zur Positionsbestimmung des Endgerätes (20) vollkommen ausreichend. Das Kommunikationsmodul 24 dient der Kommunikation zwischen Endgerät (20) und Server (1).

Letztendlich verfügt das Endgerät (20) noch Datenverarbeitungsmodul (25), welches mit den vorgenannten Einheiten und Modulen (21-24) verbunden ist. Das Datenverarbeitungsmodul (25) ist zum einen zur Erzeugung des auf dem Anzeigeelement (21) anzuzeigenden Bildes, zum anderen zur Verarbeitung der von den Standort- und Ausrichtungsbestimmungsmodulen (22) und (23) erhaltenen Standort- und Orientierungsinformationen sowie über das Kommunikationsmodul (24) erhaltene Informationen zu den digitalen Objekten (10) ausgebildet.

Das Datenverarbeitungsmodul (25) ermittelt ausgehend von dem ermittelten Standort und der ermittelten Orientierung, welche Datenpunkte (10) auf der virtuellen Fläche (11) in dem virtuellen Sichtkegel (30) liegen. Der Sichtkegel (30) ist als Pyramide mit einer rechteckigen Grundfläche entsprechend dem Anzeigeelement (21) ausgestaltet, wobei die Spitze des virtuellen Sichtkegels (30) mittig auf dem Anzeigeelement (21) liegt und die Achse (31) des Sichtkegels (30) senkrecht zu diesem verläuft.

Ausgehend von den dgitalen Objekten (10), die im Sichtkegel (30) liegen, wird anschließend anhand der ermittelten Orientierung des Endgerätes (20) eine virtuelle Horizontlinie (32) ermittelt, die auf dem Anzeigeelement (21) als virtueller Horizont (32') wiedergegeben wird. Für die Objekte (11) innerhalb des Sichtkegels (30) und gleichzeitig oberhalb der Horizontlinie (32) werden von dem Datenverarbeitungsmodul grafische Knoten (10') berechnet, die auf dem Anzeigeelement (21) wiedergegeben werden. Die Darstellung der grafischen Knoten (10') ist dabei winkel- und abstandsgetreu gegenüber den digitalen Objekten (10), vgl. Figur 3.

Die Abstände der digitalen Objekte (10) sowie deren Wiedergabe als grafische Knoten (10') auf dem Anzeigeelement (21) ist derart aufeinander abgestimmt, dass die grafischen Knoten (10') auf dem Anzeigeelement (21) eindeutig voneinander abgegrenzt sind.

Das Datenverarbeitungsmodul (25) ermittelt weiterhin, ob und, wenn ja, welches und wie lang sich ein digitales Objekt (10) im Auswahlkegel (31) befindet. Der Auswahlkegel (31) hat die Form einer Pyramide mit quadratischer Grundfläche, deren Spitze und Achse mit der Spitze und der Achse (31) des Sichtkegels (30) zusammenfallen und der sich vollständig im Sichtkegel (30) befindet. Der Auswahlkegel (31) ist dabei so auf den Abstand zwischen den digitalen Objekten (10) bzw. deren grafische Darstellung (10') abgestimmt, dass sich immer nur maximal ein digitales Objekt (10) im Auswahlkegel (31) befindet. Dadurch ist es möglich, dass ein Nutzer ein digitales Objekt (10) durch Anvisieren auswählen und die damit verknüpften Informationen abrufen kann.

Wie bereits ausgeführt, erhält das Datenverarbeitungsmodul (25) die Daten zu dem digitalen Objekt (10) über das Kommunikationsmodul (24) vom Server (1). Gleichzeitig kann das Datenverarbeitungsmodul (25) auch die Information, welches digitale Objekt (10) ein Nutzer betrachtet hat, und für wie lange, an den Server (1) zurücksenden. Bei einer Vielzahl von Nutzern ist es so möglich zu ermitteln, welche digitalen Objekte (10) offenbar besonders relevante oder interessante Informationen enthalten. Informationen, die weniger häufig und/oder nur sehr kurz angesehen werden, können durch andere Informationen ersetzt werden.

Die digitalen Objekte (10) können mit nahezu beliebigen Informationen verknüpft sein. Insbesondere können einzelne Objekte (10) aber auch mit Information verknüpft sein, die mit dem unterhalb des Objektes (10) auf der Erdoberfläche befindlichen Ort (vgl. Figur 1) korrespondiert.

Das erfindungsgemäße System eignet sich nicht nur zur Zugänglichmachung von Informationen, sondern kann auch Kommunikation zwischen verschiedenen Nutzern ermöglichen. So ist es beispielsweise möglich, dass zwischen Nutzern, die gleichzeitig ein und dasselbe digitale Objekt (10) mit ihren Endgeräten (20) anvisieren, per Chat-, Sprach - oder Videoverbindung miteinander kommunizieren.

## Patentansprüche

1. Standortbasiertes System bestehend aus einem Server in einem Kommunikationsnetzwerk, der den angeschlossenen Endgeräten Zugriff auf eine eventuell variable Menge von virtuellen digitalen Objekten ermöglicht, denen jeweils eine Position im Raum zugewiesen ist, wobei die Endgeräte umfassen:
- ein Anzeigeelement zur grafischen Anzeige von Informationen,
- ein Standortbestimmungsmodul zur Ermittlung des momentanen Standorts des Endgerätes,
- ein Ausrichtungsbestimmungsmodul zur Bestimmung der momentanen Orientierung des Endgerätes,
- ein Kommunikationsmodul und
- ein Datenverarbeitungsmodul,
wobei das Datenverarbeitungsmodul zur Ermittlung derjenigen digitalen Objekte, welche ausgehend von dem ermittelten Standort in einem virtuellen Sichtkegel um eine Kegelachse parallel zur ermittelten Orientierung liegen, und zur Berechnung einer winkel- und abstandsgetreuen Darstellung der so ermittelten digitalen Objekte als grafische Knoten zur Anzeige auf dem Anzeigeelement ausgebildet ist,
und wobei das Datenverarbeitungsmodul zur Identifizierung digitaler Objekte ausgebildet ist, die an einer besonders markierten Stelle der Anzeige, bspw. ihrem Zentrum, angezeigt werden, sodass Nutzer auf diese Weise interessierende Objekte anvisieren können,
**dadurch gekennzeichnet, dass**
- die vom Server bereitgestellten virtuellen digitalen Objekte alle auf einer mindestens 10 km von den ermittelten Standorten aller Endgeräte entfernten virtuellen Fläche angeordnet sind, wobei die Objekte derart beabstandet zueinander auf der Fläche angeordnet sind, dass sie bei der winkel- und abstandsgetreuen Darstellung auf den Endgeräten als voneinander abgegrenzt dargestellt werden,
und dass
- für die obige Ermittlung der Endgeräteposition eine Kilometer-genaue Angabe von geographischer Länge und Breite genügt, und für alle Endgeräte dieselbe Höhe von bspw. 100 m über dem Meeresspiegel angenommen werden kann,
und dass
- sich die Positionen aller digitalen Objekte relativ zu den Positionen aller Endgeräte höchstens so schnell ändern, dass den Nutzern das Anvisieren der digitalen Objektes noch gelingt,
und dass der Server mit den Nutzern, sowie die Nutzer untereinander gemäß folgendem Verfahren kommunizieren
a) Bereitstellen einer Menge von digitalen Objekten durch den Server im oben beschriebenen System, wobei diese mit spezifischen visuellen Merkmalen versehen werden können, die in den Endgeräten unmittelbar zur Anzeige kommen, sowie weiteren, nur mittelbar zugänglichen digitalen Inhalten,
b) Ermittlung sowie winkel- und abstandsgetreue Darstellung in den Endgeräten derjenigen digitalen Objekte, welche ausgehend vom je aktuell ermittelten Standort und Orientierung in einem virtuellen Sichtkegel um eine Kegelachse parallel zur ermittelten Orientierung liegen,
c) Auswahl bestimmter digitaler Objekte durch Nutzer, bspw. indem diese ein digitales Objekt über einen definierten Zeitraum hinweg anvisieren,
d) Zugänglichmachung der zu einem ausgewählten digitalen Objekt gehörenden weiteren digitalen Inhalten, sofern vorhanden,
e) Zuweisung neuer Inhalte oder visueller Merkmale zu einem ausgewählten digitalen Objekt durch dazu autorisierte Nutzer und deren Übermittlung an den Server, der sie an alle angeschlossenen Endgeräte weiterverteilt, die daraufhin ihre Anzeige entsprechend anpassen.

2. Verfahren nach Anspruch 1,
**dadurch gekennzeichnet, dass**
entsprechend autorisierte Nutzer neue digitale Objekte erzeugen können, bspw. durch längeres Anvisieren noch nicht belegter Stellen auf der vom Server bereitgestellten virtuellen Fläche, woraufhin die neuen Objekte mit ihrer Position im Raum an den Server übermittelt werden, der sie an alle angeschlossenen Endgeräte weiterverteilt, welche sodann die Verfahrensschritte b) bis e) aus Anspruch 1 auch für die neu erzeugten digitalen Objekte ausführen können.

3. System nach Anspruch 1 oder 2,
**dadurch gekennzeichnet, dass**
das Datenverarbeitungsmodul zum Ausblenden derjenigen digitalen Objekte ausgebildet ist, die unterhalb einer Linie verlaufen, die mit der Horizontlinie des ermittelten Standorts identisch ist, oder mit einer dazu parallelen Linie, die um einen, für alle Endgeräte einheitlicher Parameter nach oben in Richtung Zenit, bspw. zwischen -1° und -90°, oder nach unten in Richtung Nadir, bspw. zwischen +1° und +90°, verschoben ist.

4. System nach einem der vorhergehenden Ansprüche,
**dadurch gekennzeichnet, dass**
die virtuelle Fläche doppelt gekrümmt ist, wobei sich die Flächennormalen vorzugsweise in einem einzelnen Punkt, bspw. im Erdmittelpunkt, schneiden.

5. System nach Anspruch 4,
**dadurch gekennzeichnet, dass**
der Längenabstand jeweils benachbarter digitaler Objekte konstant ist.

6. System nach einem der vorhergehenden Ansprüche,
**dadurch gekennzeichnet, dass**
sich visuelle Merkmale oder digitale Inhalte wenigstens eines digitalen Objektes auf den unterhalb des digitalen Objektes auf der Erdoberfläche befindlichen Ort oder Nutzer beziehen.

7. System nach einem der vorhergehenden Ansprüche,
**dadurch gekennzeichnet, dass**
das Datenverarbeitungsmodul dazu ausgebildet ist, die Dauer, für die Nutzer digitale Objekte anvisieren, zu erfassen und diese Information mittels des Kommunikationsmoduls an den Server zu senden.

8. System nach einem der vorhergehenden Ansprüche,
**dadurch gekennzeichnet, dass**
Datenverarbeitungsmodul und Kommunikationsmodul dazu ausgebildet sind, fortlaufend an den Server zu übermitteln, welche Nutzer momentan welche digitale Objekte anvisieren.

9. System nach Anspruch 8,
**dadurch gekennzeichnet, dass**
der Server visuelle Merkmale oder Inhalt eines digitalen Objektes programmgesteuert abhängig davon verändert, wieviele oder welche Nutzer dasselbe Objekt zur selben Zeit anvisieren, und diese Veränderungen an alle angeschlossenen Endgeräte weiterverteilt, die daraufhin ihre Anzeige ggf. anpassen.

10. System nach Anspruch 8,
**dadurch gekennzeichnet, dass**
der Server den Nutzern, die dasselbe Objekt zur selben Zeit anvisieren, einen zusätzlichen Kommunikationskanal öffnet, über den diese Nutzer synchron kommunizieren können, bspw. per Sprachverbindung.
